# FASCICULE DE BREVET EUROPEEN

(11) **EP 3 078 466 B1**
(45) Date de publication et mention de la délivrance du brevet: **13.11.2019**
(21) Numéro de dépôt: 16163559.4
(22) Date de dépôt: 01.04.2016
(51) Int. Cl.: B29B 11/16, B29C 31/08

(54) **DRAPAGE DE PRÉFORME POUR CARTER COMPOSITE DE COMPRESSEUR DE TURBOMACHINE AXIALE**
EINHÜLLUNG DER VORFORM FÜR VERBUNDWERKSTOFFGEHÄUSE EINES KOMPRESSORS EINES AXIALEN TURBOTRIEBWERKS
PREFORM DRAPING FOR A COMPOSITE COMPRESSOR CASING OF AN AXIAL TURBINE ENGINE

(30) Priorité: 07.04.2015 BE 201505222
(43) Date de publication de la demande: 12.10.2016
(73) Titulaire: Safran Aero Boosters SA, 4041 Herstal (BE)
(72) Inventeur: BOLSEE, Hughes, 4802 Verviers (BE)
(74) Mandataire: Lecomte & Partners

(56) Documents cités:
- EP-A1- 0 470 901
- EP-A1- 1 777 063
- FR-A1- 2 985 928
- CAMPBELL F C ED - CAMPBELL FLAKE C: "Manufacturing processes for advanced composites, Ply Collation: A Major Cost Driver", 1 janvier 2004 (2004-01-01), MANUFACTURING PROCESSES FOR ADVANCED COMPOSITES, ELSEVIER ADVANCED TECHNOLOGY, OXFORD, GB, PAGE(S) 131 - 173, XP002535222, ISBN: 978-1-85617-415-2 * page 138 - page 140 * * *

## Description

### Domaine technique

L'invention a trait aux préformes pour parois composites. Plus précisément, l'invention a trait à un procédé de drapage des plis fibreux d'une préforme fibreuse pour une paroi composite. L'invention traite également d'une turbomachine comprenant un carter avec une paroi composite. L'invention traite également d'une installation de drapage de plis fibreux d'une préforme pour une paroi composite.

### Technique antérieure

Le domaine des transports emploie les matériaux composites dans l'optique de bénéficier de leur légèreté, tout en garantissant une résistance mécanique optimale. Certains matériaux composites incluent une matrice organique renforcée par une préforme fibreuse. Cette dernière peut inclure un empilement de plis fibreux tissés, à l'aide de fils entrecroisés.

La résistance mécanique qu'offre un tel composite peut être estimée à l'aide d'un logiciel. Cette résistance théorique repose sur un modèle d'orientation des fils prédéterminé. Puisqu'en réalité les fils présentent des erreurs de positionnement, par exemple dus à l'imprécision de positionnement des plis, des coefficients de sécurité sont nécessaires. Ces coefficients sont intégrés dans les calculs de résistance mécanique pour minorer la résistance escomptée ; si bien qu'il devient nécessaire de sur dimensionner la pièce composite correspondante.

Dans le cas d'une paroi composite, cela revient à en augmenter l'épaisseur. Or une telle solution n'est pas satisfaisante, en particulier dans le domaine de l'aéronautique puisque cela augmente la masse embarquée ; et impacte directement la consommation en carburant. La compacité est pénalisée ; et la sécurité n'est pas nécessairement garantie.

Le document FR 2 995 553 A1 divulgue un procédé de réalisation d'une préforme pour un carter de rétention de soufflante de turbine à gaz conçue pour l'aéronautique. Le procédé comprend l'enroulement d'une texture fibreuse sur un mandrin d'enroulement. La texture fibreuse comporte des fils traceurs qui permettent de surveiller en temps réel le cadrage de la texture grâce à une caméra. L'analyse en temps réel permet d'invalider un enroulement ; ce qui évite d'utiliser par après une préforme hors tolérances. Cependant, ce procédé implique la génération de rebus dont la proportion augmente avec le nombre de couches fibreuses empilées ; ou la complexité des formes à réaliser.

Le document EP0470901A1 divulgue un appareillage destiné à aider au drapage manuel de pièces par assemblage de plusieurs découpes de tissus ou de rubans de fibres à haute résistance pré-imprégnés de résine durcissable. L'appareillage comprend : au moins un projecteur vidéo dirigé vers l'outillage, un système de commande apte à faire projeter par les projecteurs des images indiquant la forme, l'emplacement et la texture des découpes à déposer successivement par l'opérateur ; un écran de visualisation relié au système de commande et sur lequel apparaissent lesdites images ; une caméra dirigée vers l'outillage, reliée au système de commande et apte à discerner la forme, la position et la texture des découpes déposées sur l'outillage ; et un calculateur intégré dans le système de commande, apte à comparer les images issues de la caméra avec des images de référence des découpes déposées sur l'outillage et à arrêter le processus de fabrication si une différence est constatée entre une image de référence et une image d'une découpe en place.

Le document CAMPBELL F C ED - CAMPBELL FLAKE C: « Manufacturing processes for advanced composites, Ply Collation : A major Cost Driver », 1 janvier 2004 (2004-01-01), MANUFACTURING PROCESSES FOR ADVANCED COMPOSITES, ELSEVIER ADVANCED TECHNOLOGY, OXFORD, GB, PAGE(S) 131-173, XP002535222, ISBN 978-1-58617-415-2, divulgue une unité d'empilage de plis. L'unité projette le contour que chaque plis doit respecter lors de sa mise en place dans l'empilement.

### Résumé de l'invention

### Problème technique

L'invention a pour objectif de résoudre au moins un des problèmes posés par l'art antérieur. Plus précisément, l'invention a pour objectif d'améliorer la résistance mécanique d'une paroi composite. L'invention a également pour objectif d'améliorer la précision de positionnement et d'orientation de plis fibreux dans une préforme fibreuse.

### Solution technique

L'invention a pour objet un procédé itératif d'empilement de plis fibreux pour la réalisation d'une préforme de renfort d'une paroi composite, le procédé comprenant une étape de : (a) ajout d'un pli fibreux sur un pli précédent ou sur un gabarit d'empilement, le pli fibreux ajouté présentant des repères répartis à l'intérieur de sa surface, dont au moins un premier repère et un deuxième repère ; remarquable en ce que le procédé comprend en outre les étapes de : (b) projection d'au moins deux marques lumineuses sur le pli ajouté, dont une première marque et une deuxième marque, les marques étant adaptées pour tracer sur le pli les positions prédéterminées que des repères correspondants doivent occuper dans la préforme ; (c) déplacement du pli ajouté par rapport aux marques lumineuses de sorte à ce que le premier repère coïncide avec la première marque correspondante ; (d) ajustement du pli ajouté de sorte à ce que le deuxième repère coïncide avec la deuxième marque correspondante ; les étapes précédentes étant répétées de sorte à façonner un empilement de plis fibreux formant la préforme.

Selon un mode avantageux de l'invention, l'étape (d) ajustement comprend une déformation du pli ajouté, tel un étirement ou une rétraction, pour que le deuxième repère coïncide avec la deuxième marque.

Selon un mode avantageux de l'invention, l'étape (d) ajustement comprend une rotation d'au moins une portion du pli ajouté autour de la première marque.

Selon un mode avantageux de l'invention, à l'issue de l'étape (c) déplacement du pli ajouté, le procédé comprend la mise en place d'une cale de blocage du pli ajouté, la cale étant appliquée contre le premier repère.

Selon un mode avantageux de l'invention, l'étape (b) projection comprend la projection sur le pli ajouté d'au moins trois marques lumineuses, dont une troisième marque lumineuse, l'étape (d) ajustement comprenant le déplacement et/ou la rotation, et/ou la déformation, éventuellement localisé(e), du pli ajouté de sorte que la troisième marque coïncide avec un troisième repère du pli ; préférentiellement les trois marques lumineuses définissent les sommets d'un triangle.

Selon un mode avantageux de l'invention, l'étape (b) projection comprend la projection sur le pli ajouté d'au moins N marques lumineuses, ledit pli comprenant au moins N repères correspondants, l'étape (d) ajustement comprenant le déplacement d'un ensemble de repères afin qu'ils coïncident avec leurs marques lumineuses correspondantes, la coïncidence s'effectuant, éventuellement progressivement, par ordre de proximité avec le premier repère.

Selon un mode avantageux de l'invention, au moins un ou chaque pli fibreux est un pli tissé avec des fils fibreux tissés, par exemple selon deux directions généralement perpendiculaires.

Selon un mode avantageux de l'invention, pendant l'étape (a) ajout et/ou pendant l'étape (d) ajustement, l'inclinaison des fils tissés évolue, et/ou des repères se rapprochent ou s'éloignent.

Selon un mode avantageux de l'invention, au préalable de l'étape (a) ajout, le pli est déformé de sorte à rapprocher angulairement des fils perpendiculaires, pendant l'étape (d) ajustement ces mêmes fils redeviennent perpendiculaires, au moins localement.

Selon un mode avantageux de l'invention, les plis sont préformés de sorte à ce qu'ils soient conformés à la forme de la préforme ; éventuellement les plis sont tissés de manière tridimensionnelle.

Selon un mode avantageux de l'invention, les repères comprennent des points, les marques lumineuses étant configurées pour indiquer les positions de chacun des points, et/ou pour former des points.

Selon un mode avantageux de l'invention, les repères comprennent des polygones, tels des triangles et/ou des quadrilatères, les marques lumineuses formant des polygones correspondants.

Selon un mode avantageux de l'invention, les repères forment un entrecroisement ; éventuellement un quadrillage ; les marques lumineuses étant configurées pour reproduire l'entrecroisement, éventuellement le quadrillage.

Selon un mode avantageux de l'invention, les repères comprennent des fils traceurs, éventuellement les fils traceurs traversent le pli.

Selon un mode avantageux de l'invention, les repères comprennent des arcs, éventuellement des demi-cercles, qui sont concentriques.

Selon un mode avantageux de l'invention, les repères comprennent des courbes en hélices avec des pas égaux, et/ou qui balayent des angles égaux.

Selon un mode avantageux de l'invention, lors de l'étape (a) ajout, le pli ajouté est positionné de sorte à être généralement centré par rapport au gabarit ou par rapport au pli précédent.

Selon un mode avantageux de l'invention, dans l'épaisseur de la préforme de la paroi, les repères des plis forment des jeux de repères, au moins un ou plusieurs ou chaque jeu de repères comprend des repères formant un empilement de repères selon l'épaisseur de la paroi.

Selon un mode avantageux de l'invention, la préforme comprend un axe central, la première marque étant située sur l'axe central.

Selon un mode avantageux de l'invention, la préforme est circulaire, ou en arc de cercle, avec des variations de rayons et/ou de diamètres, la première marque étant située au niveau du rayon maximal et/ou du diamètre maximal.

Selon un mode avantageux de l'invention, la préforme présente une surface principale avec un sommet, la première marque étant située sur le sommet.

Selon un mode avantageux de l'invention, la préforme forme généralement un tube ou une portion angulaire de tube, la préforme comprenant des plis tissés avec des fils perpendiculaires ; les plis tissés comprennent des fils étant agencés à 0° et à 90° par rapport à l'axe du tube ; et/ou des fils étant agencés à -45° et à +45° par rapport à l'axe du tube.

Selon un mode avantageux de l'invention, au cours de l'empilement des différents plis superposés, les premiers repères d'au moins deux plis, préférentiellement de plusieurs plis, plus préférentiellement de chaque pli, sont superposés et/ou coïncident.

Selon un mode avantageux de l'invention, au cours de l'empilement des différents plis superposés, les deuxièmes repères d'au moins deux plis, préférentiellement de plusieurs plis, plus préférentiellement de chaque pli, sont superposés et/ou coïncident.

Selon un mode avantageux de l'invention, pendant l'étape (b) projection, les marques lumineuses sont projetées à l'aide d'au moins un, préférentiellement plusieurs sources lumineuses mobiles, tels des lasers, dont les faisceaux sont configurés pour balayer la surface du pli ajouté, préférentiellement de sorte à en atteindre chaque repère ; éventuellement les sources lumineuses sont commandées par une unité de commande.

Selon un mode avantageux de l'invention, la préforme présente une forme générale de demi-tube, pendant l'étape (b) projection les marques lumineuses sont projetées à l'aide de deux lasers mobiles disposés de part et d'autre de l'axe du demi-tube.

Selon un mode avantageux de l'invention, les repères sont distants les uns des autres.

Selon un mode avantageux de l'invention, les repères sont répartis sur la majorité du pli ; éventuellement la majorité de la surface et/ou la majorité de la longueur et/ou la majorité de la largeur.

Selon un mode avantageux de l'invention, les repères sont régulièrement répartis à la surface du pli, éventuellement ils y reproduisent un motif régulier.

Selon un mode avantageux de l'invention, les repères sont répartis sur la totalité de la surface du pli ajouté, et ou de chaque pli de l'empilement.

Selon un mode avantageux de l'invention, les plis de l'empilement comprennent des fibres de même(s) nature(s).

Selon un mode avantageux de l'invention, la paroi est courbe, par exemple concave ou convexe ; éventuellement une portion de tube.

Selon un mode avantageux de l'invention, au cours de l'empilement des différents plis superposés, les premiers repères d'au moins deux plis, préférentiellement de plusieurs plis ; éventuellement successifs, sont superposés et/ou coïncident.

Selon un mode avantageux de l'invention, l'empilement comprend au moins deux plis avec des fils tissés, éventuellement successifs, identiques, préférentiellement les plis identiques présentent des mêmes orientations de fil.

Selon un mode avantageux de l'invention, le pli ajouté comprend au moins quatre repères qui définissent les sommets d'au moins un tétraèdre, préférentiellement plusieurs tétraèdres.

Selon un mode avantageux de l'invention, chaque repère correspond à une marque lumineuse, et inversement.

Selon un mode avantageux de l'invention, l'étape (b) projection comprend la projection sur le pli ajouté d'au moins N+M marques lumineuses, ledit pli présentant au moins N+M repères correspondants, N et M étant des nombres entiers positifs, l'étape (d) ajustement comprenant l'ajustement du pli de sorte que le Nième repère coïncide avec la Nième marque lumineuse correspondante, puis l'ajustement du pli de sorte que le N+Mième repère coïncide avec la N+Mième marque lumineuse correspondante, le Nième repère étant plus proche du premier repère que le N+Mième repère, et le Nième repère étant disposé entre le premier repère et le N+Mième repère.

Selon un mode avantageux de l'invention, au moins un ou chaque pli comprend au moins six repères ; préférentiellement au moins dix repères, plus préférentiellement au moins vingt repères ; éventuellement au moins cinquante repères.

Selon un mode avantageux de l'invention, les repères sont espacées, éventuellement régulièrement, de 1 cm à 100 cm, préférentiellement de 5 cm à 25 cm, éventuellement espacés de 10 cm à 15 cm.

Selon un mode avantageux de l'invention, les marques lumineuses reproduisent les formes des repères, notamment les formes que doivent montrer les repères lorsque leur pli présente sa configuration prédéfinie.

Selon un mode avantageux de l'invention, l'étape (a) ajout est une étape de mise en place de pli fibreux, et/ou une étape de recouvrement du pli précédent ou du gabarit à l'aide d'un nouveau pli recouvrant.

Selon un mode avantageux de l'invention, au moins un ou plusieurs ou chaque pli comprend des repères répartis sur sa surface, et/ou à distance de ses bords, et/ou répartis sur une zone centrale de la surface dudit plis.

L'invention a également pour objet une paroi composite, notamment d'un carter composite de compresseur basse pression de turbomachine axiale, la paroi comprenant une matrice organique et une préforme fibreuse, la préforme comprenant un empilement de plis fibreux avec des repères répartis sur leur surface; remarquable en ce que la paroi comprend une zone où un repère d'un pli coïncide avec un repère d'un autre pli de l'empilement, préférentiellement avec les repères de plusieurs autres plis de l'empilement.

Selon un mode avantageux de l'invention, la paroi comprend une zone où un pli comprend plusieurs repères qui coïncident avec des repères d'un autre pli de l'empilement, préférentiellement avec plusieurs jeux de repères coïncidents de plusieurs autres plis de l'empilement.

Selon un mode avantageux de l'invention, les repères coïncidents s'épousent, et/ou sont parallèles, et/ou forment un empilement, et/ou forment un alignement.

Selon un mode avantageux de l'invention, la paroi comprend un bord avec une bride de fixation composite renforcée par l'empilement de plis, à l'intérieur de la bride les repères forment des droites parallèles.

Selon un mode avantageux de l'invention, les brides de fixations sont généralement perpendiculaires à la paroi, éventuellement la paroi comprend des orifices de fixation.

Selon un mode avantageux de l'invention, la paroi comprend des axes de fixation, notamment d'aubes statoriques, qui traversent la préforme.

Selon un mode avantageux de l'invention, la paroi comprend au moins un orifice de fixation traversant qui est disposé entre deux repères ; et/ou des repères, éventuellement de chaque pli de l'empilement, entourent au moins un orifice de fixation traversant, ou chaque orifice de fixation traversant.

L'invention a également pour objet une turbomachine axiale comprenant une paroi composite renforcée par une préforme avec un empilement de plis, remarquable en ce que la préforme est conforme à l'invention, et/ou la paroi est conforme à l'invention ; éventuellement la turbomachine est un turboréacteur d'aéronef.

L'invention a également pour objet une installation d'empilement de plis fibreux pour la réalisation d'une préforme fibreuse d'une paroi composite, notamment d'un carter composite de compresseur de turbomachine axiale, au moins un pli fibreux présentant des repères répartis sur sa surface, l'installation comprenant : un gabarit d'empilement de plis fibreux ; un dispositif lumineux projetant au moins un rayon lumineux sur le gabarit ; remarquable en ce qu'elle comprend en outre une unité de commande du dispositif lumineux qui est configurée pour commander le dispositif lumineux de sorte qu'il projette au moins deux marques lumineuses sur chaque pli lors de sa mise en place, les marques étant adaptées pour indiquer les positions que les repères des plis doivent occuper dans la préforme.

Selon un mode avantageux de l'invention, les marques lumineuses sont adaptées à l'évolution progressive d'épaisseur de la préforme pendant l'empilement, préférentiellement au rapprochement progressif de l'empilement du dispositif lumineux.

Selon un mode avantageux de l'invention, le dispositif lumineux comprend au moins une, préférentiellement au moins deux sources lumineuses, éventuellement chaque source lumineuse est un laser.

Selon un mode avantageux de l'invention, le gabarit d'empilement comprend une surface tubulaire et/ou bombée, et éventuellement des brides.

Selon un mode avantageux de l'invention, le gabarit d'empilement comprend un axe selon son allongement principal, et/ou un axe de révolution, les deux sources lumineuses étant placées de part et d'autre dudit axe, éventuellement les deux sources lumineuses sont disposées sur un plan perpendiculaire audit axe.

Selon un mode avantageux de l'invention, les deux sources lumineuses sont disposées à 45° par rapport à la direction verticale depuis le gabarit.

Selon un mode avantageux de l'invention, le gabarit comprend une surface principale d'empilement avec un sommet, au moins une marque lumineuse est située sur et/ou centrée sur et/ou coïncide avec le sommet.

Selon un mode avantageux de l'invention, les sources lumineuses sont décalées axialement par rapport au sommet.

De manière générale, les modes avantageux de chaque objet de l'invention sont également applicables aux autres objets de l'invention. Dans la mesure du possible, chaque objet et chaque mode avantageux sont combinables.

### Avantages apportés

L'invention garantit une pièce conforme, en limitant, préférentiellement supprimant les corrections nécessaires ultérieurement. En effet, l'invention permet d'agencer un pli fibreux directement dans sa bonne position puisqu'il est placé au fur et à mesure, exactement là où il doit être. Par ce biais, l'invention permet de réduire les contrôles en cours de production. Une analyse statistique peut suffire. Un enregistrement des étapes d'ajustement pendant le drapage permet de confirmer le bon positionnement des plis grâce à leurs repères. Le procédé d'empilement de plis peut s'effectuer manuellement. Il peut également être réalisé de manière automatique puisque l'installation peut comprendre un bras d'ajout ; et/ou un bras de déplacement, d'ajustement de position du pli.

La projection d'une marque lumineuse offre une grande qualité de contrôle, car il est possible de projeter un trait lumineux dont la forme correspond à celle du repère ; l'erreur étant inférieure à 0,10mm.

L'invention propose une solution d'empilement limitant les erreurs de positionnement et d'orientation, ainsi que les variations de tension. La finesse du maillage des repères garantit la précision et l'homogénéité. La réalisation d'une bride impliquant un changement de direction ou un diamètre variable est compatible avec la qualité ajoutée par l'invention.

L'invention permet une correspondance entre plusieurs repères de différents plis, ce qui favorise l'homogénéité de la paroi composite. Sa résistance est accrue, son comportement plus prévisible ; aussi bien en statique qu'en dynamique.

### Brève description des dessins

La figure 1 représente une turbomachine axiale selon l'invention.
La figure 2 est un schéma d'un compresseur de turbomachine selon l'invention.
La figure 3 illustre un diagramme du procédé d'empilement de plis fibreux selon l'invention.
La figure 4 montre des étapes d'empilement de plis sur un gabarit selon l'invention.
La figure 5 représente une installation d'empilement de plis selon l'invention.
La figure 6 illustre une coupe de profil axial de la préforme selon l'invention.
La figure 7 trace une coupe de la préforme selon l'axe 7-7 tracé sur la figure 6 selon l'invention.
La figure 8 montre un empilement de plis de la préforme tel que représenté à la figure 6 selon l'invention.
La figure 9 représente un pli dont les fils sont disposés à 0°/90° selon l'invention.
La figure 10 représente un pli dont les fils sont disposés à 45° selon l'invention.

### Description des modes de réalisation

Dans la description qui va suivre, les termes intérieur ou interne et extérieur ou externe renvoient à un positionnement par rapport à l'axe de rotation d'une turbomachine axiale. La direction axiale correspond à la direction le long de l'axe de rotation de la turbomachine.

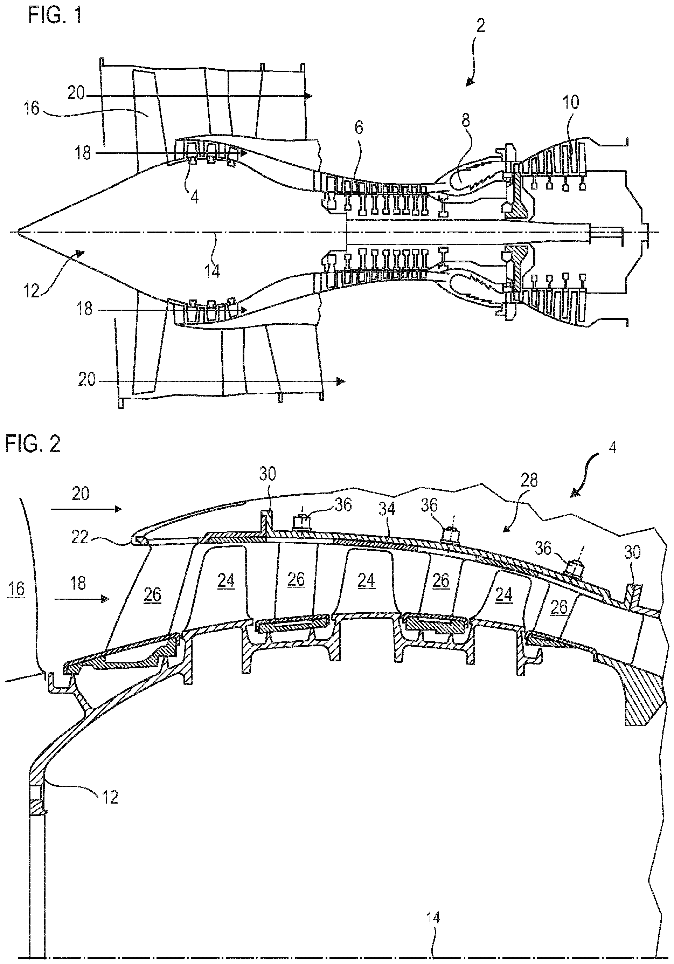

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Le flux secondaire peut être accéléré de sorte à générer une réaction de poussée. Les flux primaire 18 et secondaire 20 sont des flux annulaires, ils sont canalisés par le carter de la turbomachine. A cet effet, le carter présente des parois cylindriques ou viroles qui peuvent être internes et externes.

La figure 2 est une vue en coupe d'un compresseur d'une turbomachine axiale telle que celle de la figure 1. Le compresseur peut être un compresseur basse-pression 4. On peut y observer une partie du fan 16 ainsi que le bec de séparation 22 du flux primaire 18 et du flux secondaire 20. Le rotor 12 peut comprendre plusieurs rangées d'aubes rotoriques 24, en l'occurrence trois.

Le compresseur basse-pression 4 peut comprendre au moins un redresseur, préférentiellement plusieurs redresseurs, en l'occurrence quatre, qui contiennent chacun une rangée annulaire d'aubes statoriques 26. Chaque redresseur est associé au fan 16 ou à une rangée d'aubes rotoriques 24 pour en redresser le flux d'air, de sorte à convertir la vitesse du flux en pression.

Le compresseur comprend au moins un carter 28. Le carter 28 peut présenter une forme généralement circulaire ou tubulaire. Il peut être un carter externe de compresseur et peut être en matériaux composites, ce qui permet de réduire sa masse tout en optimisant sa rigidité. Le carter 28 peut comprendre des brides de fixation 30, par exemple des brides annulaires de fixation 30 pour la fixation du bec de séparation 22 et/ou pour se fixer à un carter intermédiaire de soufflante de la turbomachine.

La carter composite 28 peut comprendre une paroi 34 généralement circulaire ou en arc de cercle, dont les bords peuvent être délimités par les brides 30. La paroi 34 peut présenter un profil de révolution autour de l'axe de rotation 14. La paroi 34 peut présenter une forme d'ogive, avec une variation de rayon le long de l'axe 14. Cette évolution du rayon peut s'inverser, le diamètre minimal peut être en aval. La paroi 34 présente une surface intérieure avec une double courbure. La longueur axiale de la paroi 34 peut représenter la majorité du rayon minimal de la surface intérieure de la paroi, éventuellement sa longueur axiale est supérieure ou égale au rayon minimal de la surface intérieure de la paroi 34. La longueur axiale est mesurée selon l'axe de rotation 14.

Le carter composite 28, ou du moins sa paroi 34, peut être réalisé par injection. L'injection peut consister à imprégner un renfort fibreux avec une résine, éventuellement organique, telle de l'époxy. L'imprégnation peut être selon un procédé du type RTM (acronyme anglais pour Resin Transfer Molding). La paroi 34 peut comprendre en matériau composite, avec une matrice organique et un renfort, notamment fibreux, telle une préforme fibreuse.

Puisque la paroi peut présenter une forme courbe, la préforme reproduit également cette forme courbe ; les aspects décrits précédemment. La préforme peut également reproduire les brides axiales et annulaires. Elle peut respecter la symétrie de révolution avec un profil de révolution par rapport à l'axe 14. La préforme peut comprendre un empilement ou un enroulement de différentes feuilles fibreuses ou plis fibreux, qui peuvent s'étendre sur la paroi, et sur au moins une ou plusieurs brides.

Les aubes statoriques 26 s'étendent essentiellement radialement depuis la paroi 34. Les aubes statoriques 26 peuvent comprendre des plateformes, éventuellement munies d'axes de fixation 36 tels des lockbolts, de tiges filetées ou tout autre moyen équivalent. Ces axes de fixation 36 traversent la paroi, et en particulier sa préforme. L'irrégularité des efforts communiqués des axes à la préforme favorise la naissance de modes de déformation composés et complexes.

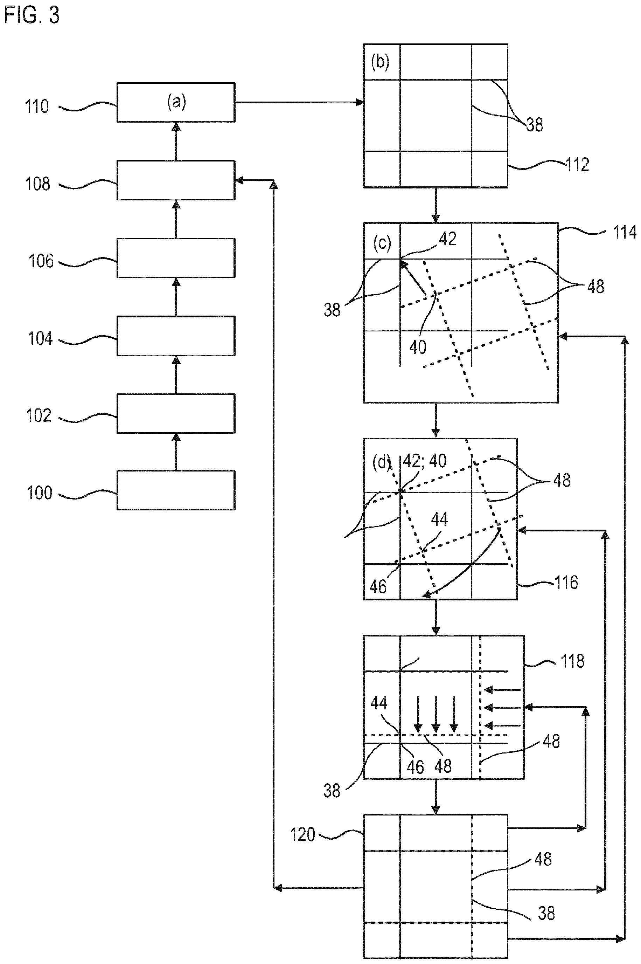

La figure 3 représente un diagramme du procédé d'empilement de plis fibreux pour la réalisation de la préforme de renfort de la paroi composite, par exemple telle que celle présentée en figure 2 en relation au carter de compresseur. Le procédé peut être un procédé itératif, qui répète toutes ou une partie de ses étapes.

Le procédé peut comprendre l'enchaînement des étapes suivantes, éventuellement effectuées dans l'ordre qui suit :
▪ définition d'une forme générale 100 d'une préforme correspondant à la paroi composite, cette définition peut anticiper un compactage, tel un compactage dans un moule d'injection ;
▪ définition des plis 102 formant la préforme par empilement ;
▪ création 104 de repères 48 prédéfinis répartis sur les plis, et définition des positions dans l'espace que les repères des plis doivent respecter lorsque la préforme est façonnée ;
▪ fourniture ou mise à disposition 106 d'un gabarit d'empilement des plis, le gabarit présentant une surface de réception de plis correspondant à une surface de la préforme, et/ou de la paroi ;
▪ fourniture ou fabrication 108 de plis fibreux avec des repères 48 précurseurs de ceux qui ont été prédéfinis ;
▪ (a) ajout 110 ou introduction d'un nouveau pli sur le gabarit, ou sur un pli précédent de l'empilement ;
▪ (b) projection 112 de marques lumineuses 38 sur le gabarit ou sur le nouveau pli ajouté, les marques 38 indiquant les positions que doivent occuper les repères 48 pour que le pli présente sa configuration prédéfinie ;
▪ (c) déplacement 114 d'un premier repère 40 du pli ajouté pour qu'il coïncide avec la première marque 42 qui lui est associée ;
▪ (d) ajustement de la position du pli ajouté pour qu'un deuxième repère 44 coïncide avec une deuxième marque 46; l'ajustement comprenant :
   - une rotation 116 d'une portion du pli ajouté, la rotation peut permettre d'amener le deuxième repère 44 sur un trait de marque lumineuse 38; et/ou
   - une déformation 118 en allongement ou en rétraction du pli ajouté, la déformation peut s'effectuer selon deux axes ; l'ordre déformation et rotation peut être inversé ; ces dernières opération peuvent s'effectuer plusieurs fois ;
▪ validation 120, en option, où un ensemble ou tous les repères coïncident.

Ensuite, le procédé peut prévoir de mettre en correspondance, pour coïncider, un troisième repère avec une troisième marque, puis un quatrième repère avec une quatrième marque, puis un Nième repère avec une Nième marque, et ainsi de suite. L'ajustement peut permettre une coïncidence de plusieurs autres repères simultanément.

Le procédé peut effectuer ces actions sur une zone avec un ensemble de repères 48, l'ordre de rapprochement peut s'effectuer par ordre de proximité avec le premier repère 40. Cela permet de travailler progressivement, de ne pas déformer ce qui a déjà été correctement positionné. Le procédé peut ensuite corriger la position de plusieurs autres repères en les déplaçant un par un, progressivement ; ou ensemble.

Des marques lumineuses 38 changent à chaque type de plis pour lui projeter des indications dédiées. Les repères 48, tout comme les marques lumineuses 38 correspondantes peuvent être entendues comme des points, des traits, des points aux intersections de traits ; ou des polygones formés par les traits ou les sommets des points. Le mécanisme de coïncidence entre les repères 48 et les marques 38 qui vient d'être décrit s'est basé sur des points. Il est également possible de conduire des coïncidences entre un trait de repère 48 avec un trait de marque lumineuse 38.

Suivant une variante, les positions dans l'espace des marques et des repères sont calculées en partant d'un modèle de pli à repères existant.

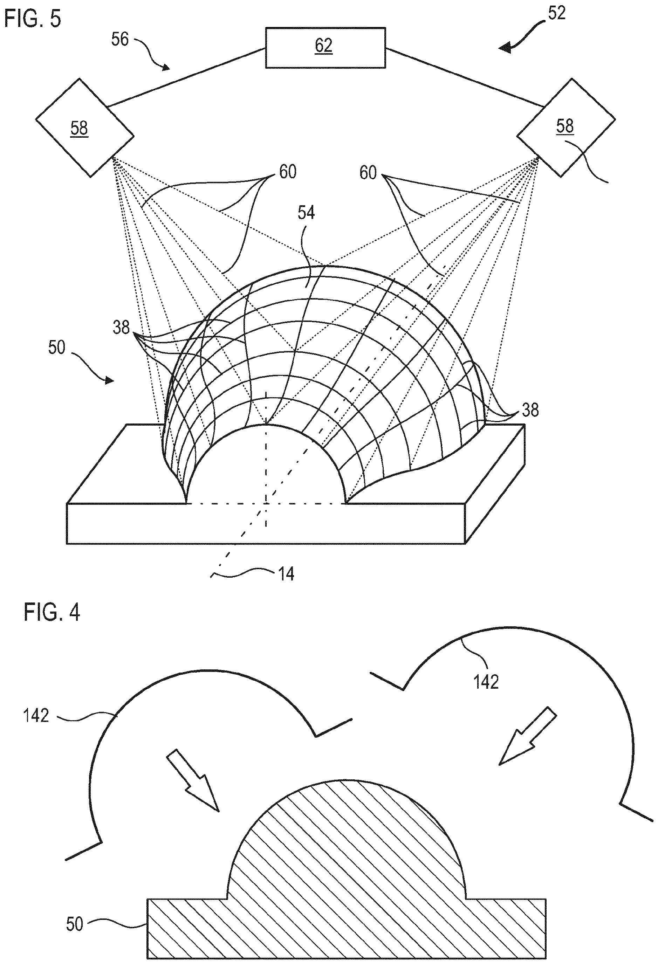

La figure 4 illustre l'opération d'empilement de plis fibreux 142 sur un gabarit 50. Le gabarit 50 forme un support de construction, de façonnage des plis.

Avant l'empilement les plis 142 peuvent être tissés de sorte à présenter généralement leur forme définitive. Ils peuvent être tissés de manière tridimensionnelle à cet effet. Ils peuvent chacun présenter des brides axiales, et éventuellement des brides radiales. Le carter et sa paroi pouvant être en demi-coquille, chaque pli préformé 142 peut reproduire la forme de demi-coquille. Les plis 142 sont mis en place sur le gabarit tour à tour. Au cours de cette opération, le nouveau pli 142 recouvre le gabarit 50 ou le pli 142 précédent. Chaque pli 142 peut être mis en place en respectant le procédé d'empilement selon l'invention.

La figure 5 représente une installation d'empilement 52 de plis fibreux pour la réalisation d'une préforme fibreuse d'une paroi composite. L'axe 14 est représenté pour fournir un repère d'orientation.

Le gabarit 50 présente une surface 54 de réception des plis, sur laquelle ils vont être appliqués, déformés en glissant dessus. La surface d'empilement 54 présente une forme correspondant à la surface que doit présenter d'un côté la préforme. La surface d'empilement 54 peut correspondre à une surface d'un moule utilisé pour former la paroi composite.

L'installation 52 comporte un dispositif lumineux 56 pour projeter les marques lumineuses 38, telles des destinations pour les repères des plis. Les marques lumineuses 38 sont à chaque fois adaptées au nouveau pli ajouté. Dans le cas présent, les marques lumineuses comprennent des lignes axiales, et des traits en arcs. Ceux-là peuvent être parallèles, leurs centres sont ici situés sur l'axe 14.

Le dispositif lumineux 56 peut comprendre plusieurs sources lumineuses 58 ; tels de lasers 58. Le choix de deux sources 58 permet d'atteindre toute la surface d'un demi-tube, en évitant l'apparition de zone d'ombre. Cette particularité permet de rapprocher les sources 58 du gabarit ; et de former une installation plus compacte malgré les bosses occultantes du gabarit 50.

Les sources peuvent être mobiles pour que leurs faisceaux 60 balayent toute la surface d'empilement 54. Une unité de commande 62 permet de commander les mouvements des sources lumineuses 58 pour que leurs faisceaux 60, éventuellement ponctuels, décrivent l'ensemble des lignes des repères des plis. Les brides axiales du gabarit 50 peuvent également être atteintes. L'unité de commande 62 permet de rendre cohérent les rayonnements 60 de chaque source lumineuse 58, une mire sur le gabarit 50 peut permettre d'étalonner le dispositif 56.

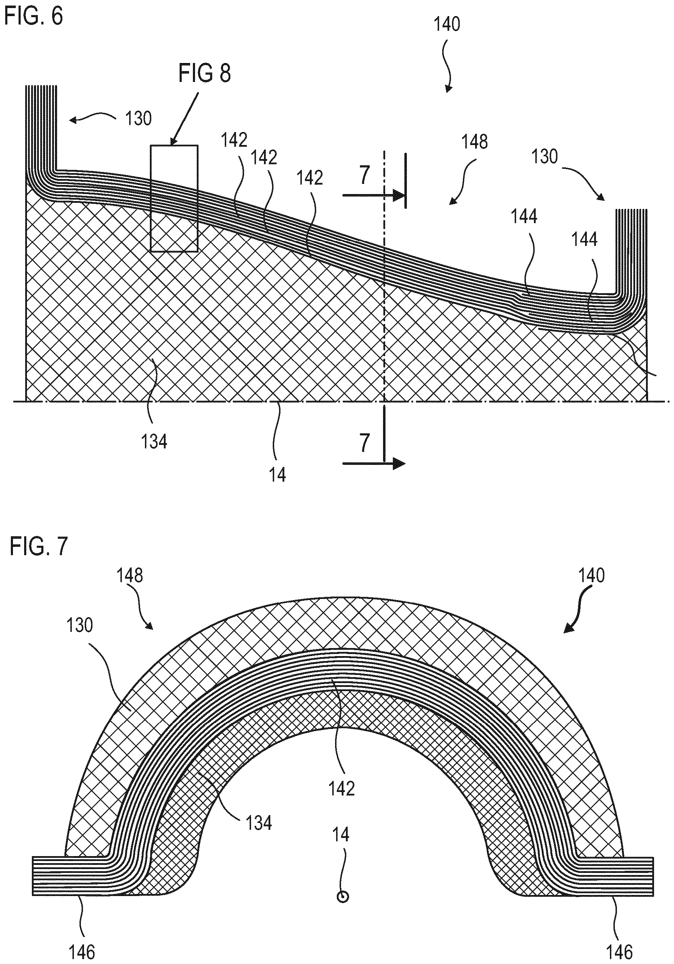

La figure 6 représente une coupe de la préforme 140 réalisée par empilement, issue du procédé d'empilement de plis 142. La préforme 140 peut correspondre à celle de la paroi composite du carter présenté en figure 2. La coupe est effectuée selon un trait correspondant à l'axe de rotation 14 de la turbomachine.

La préforme 140 peut reproduire une paroi fibreuse 134, précurseur de la paroi composite. Chaque pli 142 peut s'étendre sur une fraction axiale de la paroi. Ainsi, le nombre de plis 142 peut varier axialement. Le nombre de plis 142 peut augmenter vers l'aval. La préforme 140 peut comprendre des plis localisés 144, par exemple prévus pour une bride annulaire 130. La préforme 140 peut reproduire au moins une, préférentiellement plusieurs brides annulaires fibreuses 130 qui correspondent à celle du carter composite. Au moins un pli fibreux 142 peut joindre chaque bride annulaire 130. Préférentiellement, la majorité ou tous les plis fibreux 142 de la paroi s'étendent à l'intérieur de chaque bride annulaire 130, éventuellement sur toute la hauteur radiale.

Au moins un ou chaque pli fibreux 142 est tissé selon la forme de la paroi 142, et éventuellement en intégrant la forme de brides 130. Chaque pli 142 peut être préformé, et/ou déformé avant d'être empilé, éventuellement sa forme peut être ajustée lors de son drapage dans l'empilement 148. La majorité des plis fibreux 142 peut s'étendre sur toute la longueur axiale de la paroi 134.

La figure 7 représente une coupe de la préforme 140 suivant l'axe 7-7 tracé sur la figure 6. L'axe 14 est tracé pour offrir un repère d'orientation.

Le carter composite peut décrire un cercle. Il peut être formé de deux demi-carters annulaires qui décrivent chacun un demi-cercle. Ainsi, le carter annulaire peut comprendre deux préformes 140 formant des demi-cercles. Pour joindre les demi-carters, ceux-ci sont munis de brides axiales de fixation destinées à être fixées les unes aux autres. Elles sont renforcées par des brides axiales fibreuses 146 de la préforme 140. Les brides axiales bordent les portions de parois 134.

La préforme 140, via son empilement 148 peut comprendre au moins un pli 142 qui s'étend dans la paroi 134 et dans chaque bride axiale 146. Eventuellement, la majorité des plis 142 ou chaque pli s'étend(ent) dans la paroi fibreuse 134 et dans chaque bride axiale 146, éventuellement sur toute la surface de chaque bride axiale.

La figure 8 représente l'empilement 148 des plis fibreux 142 de la préforme. L'axe 14 est représenté pour fournir un repère d'orientation de la direction d'empilement.

Les plis 142 peuvent être des plis tissés. L'empilement 148 peut comprendre des plis non tissés, la majorité des plis de l'empilement 148 étant alors préférentiellement des plis tissés. Les plis 142 peuvent comprendre des fibres de carbone, et/ou des fibres de graphite, et/ou des fibres de verre.

La majorité des plis 142 de l'empilement 148 peuvent présenter des fibres de même nature. Préférentiellement, les fibres de l'empilement 148 sont des fibres de même nature, par exemple des fibres de carbone. L'empilement 148 peut être un empilement principal. L'empilement peut être recouvert de plis dont les fibres sont en un autre matériau, telles de fibres de verre pour éviter la corrosion galvanique du carter composite.

L'empilement 148 peut comprendre de 8 à 30 plis tissés 142, éventuellement avec des fibres de même nature ; préférentiellement de 10 à 20 plis tissés 142, éventuellement avec des fibres de même nature ; plus préférentiellement de 12 à 16 plis tissés 142, éventuellement avec des fibres de même nature.

Sur la majorité de la surface de la paroi, l'empilement 148 peut présenter une symétrie selon l'épaisseur du type de plis 142 et de l'orientation des fibres.

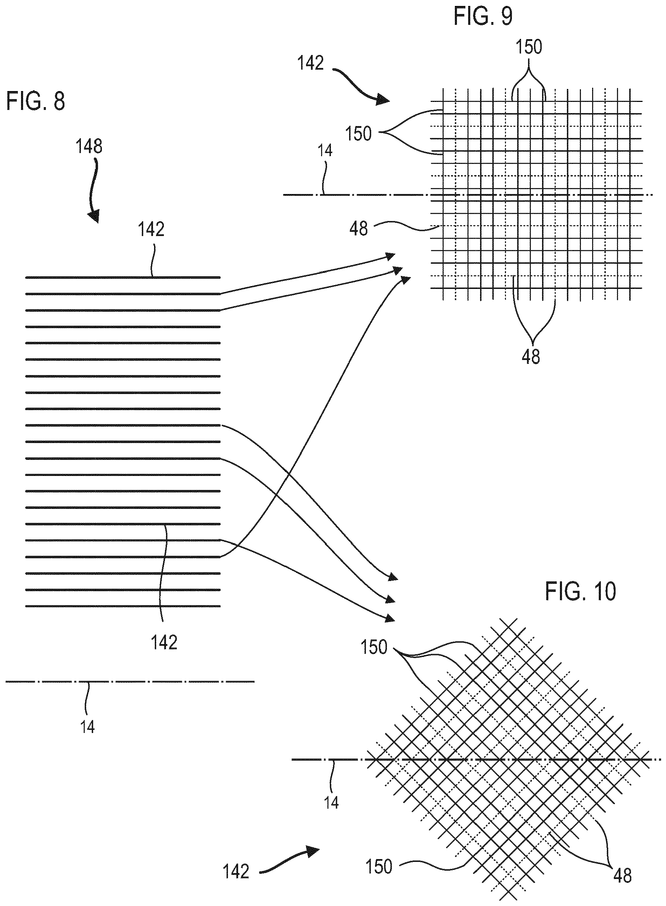

La figure 9 représente un pli fibreux 142 de l'empilement 148. L'axe 14 est représenté pour fournir un repère d'orientation des fibres. Le pli 142 est représenté développé, en plan.

Le pli tissé 142 représenté comporte des fils fibreux tissés 150. Les fils 150 forment deux jeux de fils perpendiculaires. Les fils 150 d'un jeu sont parallèles à l'axe 14 tandis que les fils 150 de l'autre jeu sont perpendiculaires à ce même axe 14. Chaque fil 150 de fibres présente plusieurs fibres selon sa section, par exemple six mille fibres (6k), douze mille fibres (12k), ou d'avantage. Chaque fil peut être torsadé ou tressé.

Le pli tissé 142 peut être tissé à l'aide de fils de chaîne et de fils de trame. Les fils de trame peuvent être généralement disposés selon l'axe de rotation 14 de la turbomachine et peuvent comprendre les fibres axiales, et les fils de chaîne peuvent être généralement disposés selon la circonférence de la paroi et peuvent comprendre les fibres circonférentielles.

En complément, le pli 142 comporte des fils traceurs 48 formant des repères 48. Les fils traceurs 48 peuvent être d'une autre couleur que les autres fils 150, dits fils majoritaires 150. Ces derniers peuvent être en carbone, donc de couleur noire ; les fils traceurs sont alors blancs pour favoriser le contraste. Ces fils traceurs 48 peuvent être parallèles aux fils majoritaires 150 pour reproduire leur orientation. Ils peuvent être intercalés, ajoutés ou remplacer des fils majoritaires 150.

Les fils traceurs 48 sont agencés en deux jeux de fils perpendiculaires, ils sont orientés à 0° par rapport à l'axe 14, ou 90°. Ils sont soit axiaux ou selon la circonférence. Ils forment un entrecroisement, éventuellement un quadrillage. Ce quadrillage est justement l'image que projette le dispositif lumineux sur le gabarit ; l'image projetée étant adaptée à la géométrie particulière du gabarit.

La figure 10 représente un pli fibreux 142 de l'empilement 140. L'axe 14 est représenté pour fournir un repère d'orientation. Le pli 142 est représenté développé, en plan.

Le pli 142 présente également des fils majoritaires 150 tissés selon deux directions perpendiculaires. Les fils 142 sont généralement orientés à -45° ou à +45° par rapport à l'axe 14, et/ou par rapport à la circonférence du carter composite. En complément, le pli 142 présente des fils traceurs 48 perpendiculaires, intégrés au pli 142. Lorsque le pli 142 occupe sa position dans la préforme, ses fils traceurs 48 décrivent des hélices, des hélicoïdes ; éventuellement à pas variables et/ou à rayons variables. Lorsque le dispositif lumineux projette les marques lumineuses, il projette un quadrillage. Dans l'espace, les trais du quadrillage parcourent des hélices, des vrilles.

L'empilement qui vient d'être présenté comporte des fils agencés selon deux directions, mais il est possible d'avoir trois fils par exemple orientés à -30°/90°/+30° par rapport à l'axe 14. L'empilement de la figure 8 peut présenter toute répartition de plis tels que ceux décrits en relation avec les figures 9 et 10, ou encore de plis à trois directions de fils.

L'invention a été présentée en rapport à un carter moteur, toutefois elle peut également s'appliquer au fuselage d'un aéronef, à un carter de soufflante, à des structures. L'invention peut également offrir des solutions pour des éléments de carrosserie d'un véhicule ; à une caisse, par exemple au toit composite d'un véhicule.

## Revendications

1. Procédé itératif d'empilement de plis fibreux (142) pour la réalisation d'une préforme (140) de renfort d'une paroi composite (134), le procédé comprenant une étape de :
(a) ajout (110) d'un pli fibreux (142) sur un pli précédent ou sur un gabarit d'empilement (50),
le pli fibreux ajouté (142) présentant des repères (40 ; 44 ; 48) répartis à l'intérieur de sa surface, dont au moins un premier repère (40) et un deuxième repère (44);
**caractérisé en ce que** le procédé comprend en outre les étapes de :
(b) projection (112) d'au moins deux marques lumineuses (42 ; 46 ; 38) sur le pli ajouté, dont une première marque (42) et une deuxième marque (46), les marques (42 ; 46 ; 38) étant adaptées pour tracer sur le pli (142) les positions prédéterminées que des repères correspondants (40 ; 44 ; 48) doivent occuper dans la préforme (140);
(c) déplacement du pli ajouté (142) par rapport aux marques lumineuses (42 ; 46 ; 38) de sorte à ce que le premier repère (40) coïncide avec la première marque correspondante (42);
(d) ajustement (116 ; 118) du pli ajouté (142) de sorte à ce que le deuxième repère (44) coïncide avec la deuxième marque correspondante (46);
les étapes précédentes étant répétées de sorte à façonner un empilement (148) de plis fibreux (142) formant la préforme (148).

2. Procédé selon la revendication 1, **caractérisé en ce que** l'étape (d) ajustement (116; 118) comprend une déformation (118) du pli ajouté (142), tel un étirement ou une rétraction, pour que le deuxième repère (44) coïncide avec la deuxième marque (46), et/ou l'étape (d) ajustement (116 ; 118) comprend une rotation (116) d'au moins une portion du pli ajouté (142) autour de la première marque (42).

3. Procédé selon l'une des revendications 1 à 2, **caractérisé en ce qu'**à l'issue de l'étape (c) déplacement (114) du pli ajouté (142), le procédé comprend la mise en place d'une cale de blocage du pli ajouté(142), la cale étant appliquée contre le premier repère (40).

4. Procédé selon l'une des revendications 1 à 3, **caractérisé en ce que** l'étape (b) projection comprend la projection sur le pli ajouté (142) d'au moins N marques lumineuses (42 ; 46 ; 38), ledit pli (142) comprenant au moins N repères (40 ; 44; 48) correspondants, l'étape (d) ajustement (116 ; 118) comprenant le déplacement d'un ensemble de repères (40 ; 44 ; 48) afin qu'ils coïncident avec leurs marques lumineuses correspondantes (42 ; 46 ; 38), la coïncidence s'effectuant, éventuellement progressivement, par ordre de proximité avec le premier repère (40).

5. Procédé selon l'une des revendications 1 à 4, **caractérisé en ce qu'**au moins un ou chaque pli fibreux (142) est un pli tissé (142) avec des fils fibreux tissés (150), par exemple selon deux directions généralement perpendiculaires, et à l'étape (a) ajout (110) et/ou pendant l'étape (d) ajustement (116; 118), l'inclinaison des fils tissés (150) évolue, et/ou des repères (40 ; 44 ; 48) se rapprochent ou s'éloignent.

6. Procédé selon l'une des revendications 1 à 5, **caractérisé en ce que** les repères (40 ; 44 ; 48) comprennent des polygones, tels des triangles et/ou des quadrilatères, les marques lumineuses (42 ; 46 ; 38) formant des polygones correspondants.

7. Procédé selon l'une des revendications 1 à 6, **caractérisé en ce que** les repères (40 ; 44 ; 48) forment un entrecroisement ; éventuellement un quadrillage ; les marques lumineuses (42 ; 46 ; 38) étant configurées pour reproduire l'entrecroisement, éventuellement le quadrillage.

8. Procédé selon l'une des revendications 1 à 7, **caractérisé en ce que** les repères (40 ; 44 ; 48) comprennent des arcs, éventuellement des demi-cercles, qui sont concentriques, et/ou des courbes en hélices avec des pas égaux, et/ou qui balayent des angles égaux.

9. Procédé selon l'une des revendications 1 à 8, **caractérisé en ce que** la préforme (140) présente une surface principale avec un sommet, la première marque (42) étant située sur le sommet.

10. Paroi composite (34), notamment d'un carter composite (28) de compresseur basse pression (4) de turbomachine axiale (2), la paroi (34) comprenant une matrice organique et une préforme fibreuse (140), la préforme (140) comprenant un empilement de plis fibreux (142) avec des repères (40 ; 44 ; 48) répartis sur leur surface;
**caractérisé en ce que**
la paroi (34) comprend une zone où un repère (40 ; 44 ; 48) d'un pli (142) coïncide avec un repère (40 ; 44 ; 48) d'un autre pli (142) de l'empilement, préférentiellement avec les repères (40 ; 44 ; 48) de plusieurs autres plis (142) de l'empilement (148).

11. Paroi (34) selon la revendication 10, **caractérisée en ce que** qu'elle comprend une zone où un pli (142) comprend plusieurs repères (40 ; 44 ; 48) qui coïncident avec des repères (40 ; 44 ; 48) d'un autre pli (142) de l'empilement (148), préférentiellement avec plusieurs jeux de repères (40 ; 44 ; 48) coïncidents de plusieurs autres plis (142) de l'empilement (148).

12. Paroi (34) selon l'une des revendications 10 à 11, **caractérisée en ce qu'**elle comprend un bord avec une bride de fixation (30) composite renforcée par l'empilement (148) de plis (142), à l'intérieur de la bride (30) les repères forment des droites parallèles.

13. Turbomachine (2) axiale comprenant une paroi composite (34) renforcée par une préforme (140) avec un empilement (148) de plis (142), **caractérisée en ce que** la paroi (34) est conforme à l'une des revendications 10 à 12 ; éventuellement la turbomachine (2) est un turboréacteur d'aéronef, et/ou la préforme (140) est conforme à l'une des revendications 1 à 9.

## Patentansprüche

1. Iteratives Verfahren zum Stapeln von Faserlagen (142) zur Herstellung einer Verstärkungsvorform (140) einer Kompositwand (134), wobei das Verfahren einen Schritt umfasst des:
a) Hinzufügens (110) einer Faserlage (142) auf einer vorangehenden Lage oder auf einer Stapelschablone (50),
wobei die hinzugefügte Faserlage (142) Orientierungszeichen (40; 44; 48) hat, die im Inneren ihrer Oberfläche verteilt sind, einschließlich mindestens eines ersten Orientierungszeichens (40) und eines zweiten Orientierungszeichens (44);
**dadurch gekennzeichnet, dass** das Verfahren weiter die Schritte umfasst des:
b) Projizierens (112) mindestens zweier Leuchtmarkierungen (42; 46; 38) auf der hinzugefügten Lage einschließlich einer ersten Markierung (42) und einer zweiten Markierung (46), wobei die Markierungen (42; 46; 38) dazu angepasst sind, um die vorbestimmten Positionen auf der Lage (142) abzuzeichnen, die die entsprechenden Orientierungszeichen (40; 44; 48) in der Vorform (140) einnehmen sollen;
c) Verschiebens der hinzugefügten Lage (142) relativ zu den Leuchtmarkierungen (42; 46; 38) derart, dass das erste Orientierungszeichen (40) mit der entsprechenden ersten Markierung (42) übereinstimmt;
d) Anpassens (116; 118) der hinzugefügten Lage (142) derart, so dass das zweite Orientierungszeichen (44) mit der entsprechenden zweiten Leuchtmarkierung (46) übereinstimmt;
wobei die vorhergehenden Schritte derart wiederholt werden, dass sie einen Stapel (148) Faserlagen (142) ausbilden, der die Vorform bildet (148).

2. Verfahren nach Anspruch 1, **dadurch gekennzeichnet, dass** der Schritt (d) des Anpassens (116; 118) eine Verformung (118) der hinzugefügten Lage (142) umfasst, wie eine Dehnung oder eine Schrumpfung, damit das zweite Orientierungszeichen (44) mit der zweiten Markierung (46) übereinstimmt, und/oder dass der Schritt (d) des Anpassens (116; 118) eine Drehung (116) von mindestens einem Teil der hinzugefügten Lage (142) um die erste Markierung (42) umfasst.

3. Verfahren nach einem der Ansprüche 1 bis 2, **dadurch gekennzeichnet, dass** am Ende von Schritt c) des Verschiebens (114) der hinzugefügten Lage (142) das Verfahren die Positionierung einer Blockadeunterlage der hinzugefügten Lage (142) umfasst, wobei die Unterlage gegen das erste Orientierungszeichen (40) angewendet wird.

4. Verfahren nach einem der Ansprüche 1 bis 3, **dadurch gekennzeichnet, dass** der Schritt (b) des Projizierens die Projektion von mindestens N Leuchtmarkierungen (42; 46; 38) auf die hinzugefügte Lage (142) umfasst, wobei die besagte Lage (142) zumindest N entsprechende Orientierungszeichen (40; 44; 48) umfasst, wobei der Schritt (d) des Anpassens (116; 118) die Verschiebung einer Gesamtheit von Orientierungszeichen (40; 44; 48) umfasst, damit sie mit ihren entsprechenden Leuchtmarkierungen (42; 46; 48) zusammenfallen, wobei das Zusammenfallen, möglicherweise schrittweise, nach dem Grad der Nähe zu dem ersten Orientierungszeichen (40) ausgeführt wird.

5. Verfahren nach einem der Ansprüche 1 bis 4, **dadurch gekennzeichnet, dass** mindestens eine oder jede Faserlage (142) eine gewebte Lage (142) mit gewebten Faserfäden (150) ist, beispielsweise in zwei allgemein senkrechte Richtungen zueinander, und wobei bei dem Schritt (a) des Hinzufügens (110) und/oder während des Schrittes (d) des Anpassens (116; 118) sich die Neigung der gewebten Fäden (150) verändert und/oder die Orientierungszeichen (40; 44; 48) sich aneinander annähern oder sich voneinander entfernen.

6. Verfahren nach einem der Ansprüche 1 bis 5, **dadurch gekennzeichnet, dass** die Orientierungszeichen (40; 44; 48) Vielecke wie Dreiecke und/oder Vierecke umfassen, und wobei die Leuchtmarkierungen (42; 46; 38) entsprechende Vielecke ausbilden.

7. Verfahren nach einem der Ansprüche 1 bis 6, **dadurch gekennzeichnet, dass** die Orientierungszeichen (40; 44; 48) ein Geflecht, möglicherweise ein Gitternetz bilden, wobei Leuchtmarkierungen (42; 46; 38) konfiguriert sind, um das Geflecht, möglicherweise das Gitternetz, zu reproduzieren.

8. Verfahren nach einem der Ansprüche 1 bis 7, **dadurch gekennzeichnet, dass** die Orientierungszeichen (40; 44; 48) Bögen, möglicherweise Halbkreise, umfassen, die konzentrisch sind, und/oder helixförmige Kurven mit gleichen Steigungen, und/oder die gleiche Winkel überstreichen.

9. Verfahren nach einem der Ansprüche 1 bis 8, **dadurch gekennzeichnet, dass** die Vorform (140) eine Hauptoberfläche mit einem Scheitelpunkt hat, wobei die erste Markierung (42) sich auf dem Scheitelpunkt befindet.

10. Kompositwand (34), insbesondere von einem Kompositgehäuse (28) eines Niederdruckkompressors (4) einer axialen Turbomaschine (2), wobei die Wand (34) eine organische Matrix und einer Faservorform (140) umfasst, wobei die Vorform (140) einen Stapel von Faserlagen (142) mit Orientierungszeichen (40; 44; 48) umfasst, die über ihre Oberfläche verteilt sind;
**gekennzeichnet dadurch, dass**
die Wand (34) einen Bereich umfasst, in dem ein Orientierungszeichen (40; 44; 48) von einer Lage (142) mit einem Orientierungszeichen (40; 44; 48) von einer anderen Lage (142) des Stapels zusammenfällt, vorzugsweise mit den Orientierungszeichen (40; 44; 48) von mehreren anderen Lagen (142) des Stapels (148).

11. Wand (34) nach Anspruch 10, **dadurch gekennzeichnet, dass** sie einen Bereich umfasst, in dem eine Lage (142) mehrere Orientierungszeichen (40; 44; 48) umfasst, die mit Orientierungszeichen (40; 44; 48) von einer anderen Lage (142) des Stapels (148) zusammenfallen, vorzugsweise mit mehreren zusammenfallenden Sätzen von Orientierungszeichen (40; 44; 48) von mehreren anderen Lagen (142) des Stapels (148).

12. Wand (34) nach einem der Ansprüche 10 bis 11, **dadurch gekennzeichnet, dass** sie einen Rand mit einem Kompositbefestigungsflansch (30) umfasst, der durch einen Stapel (148) von Lagen (142) verstärkt ist, wobei die Orientierungszeichen im Inneren des Flansches (30) parallele Geraden bilden.

13. Axiale Turbomaschine (2) umfassend eine Kompositwand (34), die durch eine Vorform (140) mit einem Stapel (148) Lagen (142) verstärkt ist, **dadurch gekennzeichnet, dass** die Wand (34) gemäß einem der Ansprüche 10 bis 12 ist; wobei die Turbomaschine möglicherweise ein Strahltriebwerk eines Luftfahrzeuges ist und/oder wobei die Vorform (140) gemäß einem der Ansprüche 1 bis 9 ist.

## Claims

1. Iterative method of stacking fibre plies (142) for producing a reinforcing preform (140) of a composite wall (134), the method comprising a step of:
(a) adding (110) a fibre ply (142) onto a preceding ply or onto a stacking template (50),
the added fibre ply (142) having reference markings (40; 44; 48) distributed over its surface, including at least a first reference marking (40) and a second reference marking (44);
**characterized in that** the method further comprises the steps of:
(b) projecting (112) at least two illuminated marks (42; 46; 38) onto the added ply, including a first mark (42) and a second mark (46), the marks (42; 46; 38) being adapted to trace on the ply (142) the predetermined positions that the corresponding reference markings (40; 44; 48) are to occupy in the preform (140);
(c) moving the added ply (142) relative to the illuminated marks (42; 46; 38) so that the first reference marking (40) coincides with the first corresponding mark (42);
(d) adjusting (116; 118) the added ply (142) so that the second reference marking (44) coincides with the second corresponding mark (46);
the preceding steps being repeated so as to form a stack (148) of fibre plies (142) forming the preform (148).

2. Method according to claim 1, **characterized in that** the adjustment step (d) (116; 118) comprises a deformation (118) of the added ply (142), such as stretching or shrinking, so that the second reference marking (44) coincides with the second mark (46), and/or the adjustment step (d) (116; 118) comprises a rotation (116) of at least a portion of the added ply (142) around the first mark (42).

3. Method according to any of claims 1 to 2, **characterized in that**, at the end of step (c) of moving (114) the added ply (142), the method comprises the positioning of a wedge for locking the added ply (142), the wedge being applied against the first reference marking (40).

4. Method according to any of claims 1 to 3, **characterized in that** the projection step (b) comprises the projection of at least N illuminated marks (42; 46; 38) onto the added ply (142), said ply (142) comprising at least N corresponding reference markings (40; 44; 48), the adjustment step (d) (116; 118) comprising the movement of a set of reference markings (40; 44; 48) so that they coincide with their corresponding illuminated marks (42; 46; 38), the coincidence being established, possibly in a progressive way, in order of proximity to the first reference marking (40).

5. Method according to any of claims 1 to 4, **characterized in that** at least one, or each, fibre ply (142) is a ply (142) woven with woven fibrous threads (150), in two generally perpendicular directions for example, and during the addition step (a) (110) and/or during the adjustment step (d) (116; 118), the inclination of the woven threads (150) varies, and/or some reference markings (40; 44; 48) move towards or away from one another.

6. Method according to any of claims 1 to 5, **characterized in that** the reference markings (40; 44; 48) comprise polygons, such as triangles and/or quadrilaterals, the illuminated marks (42; 46; 38) forming corresponding polygons.

7. Method according to any of claims 1 to 6, **characterized in that** the reference markings (40; 44; 48) form an interlacing pattern, and possibly a grid pattern, the illuminated marks (42; 46; 38) being configured to reproduce the interlacing, and possibly the grid pattern.

8. Method according to any of claims 1 to 7, **characterized in that** the reference markings (40; 44; 48) comprise arcs, possibly semicircles, which are concentric, and/or helical curves which have equal pitches and/or which sweep equal angles.

9. Method according to any of claims 1 to 8, **characterized in that** the preform (140) has a main surface with an apex, the first mark (42) being located on the apex.

10. Composite wall (34), notably a wall of a composite casing (28) of a low-pressure compressor (4) of an axial turbine engine (2), the wall (34) comprising an organic matrix and a fibre preform (140), the preform (140) comprising a stack of fibre plies (142) with reference markings (40; 44; 48) distributed over their surfaces,
**characterized in that**
the wall (34) comprises an area where a reference marking (40; 44; 48) of a ply (142) coincides with a reference marking (40; 44; 48) of another ply (142) of the stack, preferably with the reference markings (40; 44; 48) of a plurality of other plies (142) of the stack (148).

11. Wall (34) according to claim 10, **characterized in that** it comprises an area where a ply (142) comprises a plurality of reference markings (40; 44; 48) which coincide with the reference markings (40; 44; 48) of another ply (142) of the stack (148), preferably with a plurality of sets of coincident reference markings (40; 44; 48) of a plurality of other plies (142) of the stack (148).

12. Wall (34) according to any of claims 10 to 11, **characterized in that** it comprises an edge with a composite fastening flange (30) reinforced by the stack (148) of plies (142), the reference markings forming parallel straight lines within the flange (30).

13. Axial turbine engine (2) comprising a composite wall (34) reinforced by a preform (140) with a stack (148) of plies (142), **characterized in** the wall (34) conforms to any of claims 10 to 12; the turbine engine (2) may possibly be a turbojet of an aircraft, and/or the preform (140) conforms to any of claims 1 to 9.
